# EUROPEAN PATENT APPLICATION

(11) **EP 1 815 959 A1**
(43) Date of publication of application: **08.08.2007**
(21) Application number: 05806185.4
(22) Date of filing: 14.11.2005
(51) Int. Cl.: B29B 13/06, C08F 6/00, B29K 21/00

(54) **METHOD OF DRYING WET POLYMER**

(30) Priority: 19.11.2004 JP 2004336173
(71) Applicant: JSR Corporation, Tokyo 104-8410 (JP)
(72) Inventor: NAKAZAWA, Kazuyoshi, c/o JSR CORPORATION, Tokyo 1048410 (JP); YAMADA, Masahide, c/o JSR CORPORATION, Tokyo 1048410 (JP); WADA, Takeshi, c/o JSR CORPORATION, Tokyo 1048410 (JP)
(86) International application number: PCT/JP2005/020862
(87) International publication number: WO 2006/054525

(57) **Abstract**

In a method for drying a water-containing polymer, use is made of an expansion type extrusion drying means, in which while extruding the water-containing polymer, carbon dioxide is charged. According to this method, a load power fluctuation of the drying means can be stabilized and reduced with excellent drying performance upon drying a water-containing polymer, and a productivity enhancement can be attempted.

## Description

### Technical Field

The present invention relates to a method for drying a water-containing polymer capable of stabilizing and reducing a load power fluctuation of the drying apparatus in a drying step while ensuring excellent drying performance, and whereby a productivity enhancement can be attempted.

### Background Art

There has conventionally been known a method of drying, using an expansion type extrusion drying apparatus, a water-containing polymer prepared by removing a solvent or a coexisting monomer by steam-stripping or the like in producing a synthetic rubber such as solution polymerization styrene-butadiene rubber (S-SBR), emulsion polymerization styrene-butadiene rubber (E-SBR), ethylene·alpha-olefin copolymer and/or ethylene·alpha-olefin·non conjugated polyene copolymer, butadiene rubber (BR), isoprene rubber (IR), acrylonitrile butadiene rubber (NBR), and acrylic rubber; a resin such as ABS resin, AES resin, polyethylene, polystyrene, polypropylene, poly(vinyl chloride), AS resin, butadiene resin, and hydrogenated diene-based copolymer; a thermoplastic elastomer copolymer (TPE).

That is, as a method for collecting these polymers (rubber, resin) produced by solution polymerization, emulsion polymerization, suspension polymerization, or the like, there is employed a method where the polymer is brought into contact with a coagulant in hot water to separate the polymer or a method where a solvent, an unreacted monomer, or the like, is removed from the polymer by steam-stripping, or the like. In these methods, the polymer finally contains water in the amount of about 50% by mass. After the collected polymer containing about 50% by mass of water is dehydrated until it has a water content of 5 to 20% by mass with an extrusion type dehydrator, it is further dried with a drying apparatus such as a band dryer or an extrusion type drier in order to remove water to obtain a polymer having a predetermined low water content.

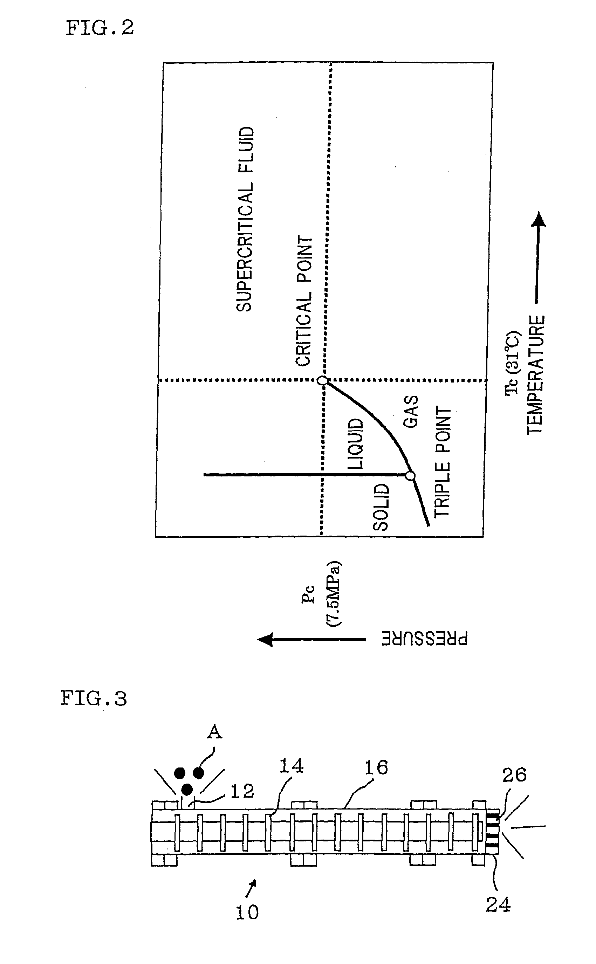

As a drying means, use of an expansion type extrusion drying apparatus, which is compact and can be operated relatively easily, has been increasing. Fig. 3 is a schematic structural view showing an example of a conventionally known expansion type extrusion drying apparatus, where the water-containing polymer A charged to the extrusion drying apparatus 10 from a charge port 12 thereof receives rotation of a screw 14 and is transferred to the downstream side through the inside of the cylinder 16 with being compressed. At this time, there arise problems that smooth transportation and compression inside the cylinder 16 cannot sufficiently be obtained because of lack of thrust of the polymer A inside the cylinder 16 or uneven compression, which makes it difficult to obtain dried polymer at a certain rate, and, as a result, it is difficult to sufficiently lower a water content of the resultant dried polymer. Therefore, pressurized gas of air or the like is sent by blowing to a charge portion to attempt to improve drying speed and water content (see, e.g., JP-A-4-175109). Incidentally, the screw 14 described above is sometimes called "Worm".

However, as described above, in a method of attempting improvement in drying performance of a rubber-form polymer by sending air therein, mixing of air in the rubber-form polymer is not sufficient, and a load power fluctuation range is large and unstable with respect to a load of power of a drying apparatus, which causes productivity deterioration. Though drying is fluctuated depending on kind of a polymer and a content of water remaining in the preceding step, dying is generally performed at about 100 to 300°C. When the drying temperature is too high, thermal hardening deterioration is caused, and, when the drying temperature is low, drying is insufficient to require redrying. Therefore, there is required a method for effectively drying a polymer at a temperature where thermal hardening deterioration is not caused.

In particular, in the case that drying is insufficient, a load in an additional drying step (after drying) increases, and drying for a long time at the cost of productivity is sometimes required. Thus, there arises a problem of low productivity as a bottleneck in a manufacturing process other than increase in energy consumption, having apprehensions of coloring of the polymer, an accident of ignition or the like, and calamity.

Further, in the case of drying at high temperature, there is not only thermal hardening deterioration. In the case of a rubber polymer, a polymer obtained after passing through a drying step is sometimes processed to have a rectangular parallelepiped shape which is called bale and charged to a container in a state that it has a heat of right after the finishing. At this time, the bale in the container is in an easily flowing state, and therefore it is apprehended that a problem called hot bale, which destroys the container, is caused.

### Disclosure of the Invention

Therefore, the present invention has been made in view of the aforementioned problems of prior art and provides a method for drying a water-containing polymer capable of stabilizing and reducing a load power fluctuation of the drying apparatus upon drying a water-containing polymer while ensuring excellent drying performance at relatively low temperature, and thereby a productivity enhancement can be attempted.

According to the present invention, there is provided a method for drying a water-containing polymer, wherein, using an expansion type extrusion drying means, carbon dioxide is charged to the extrusion drying means while extruding the water-containing polymer.

In the present invention, it is preferable that the aforementioned expansion type extrusion drying means is provided with: a cylinder, a water-containing polymer charge port provided on the upstream side of the cylinder, a screw for transporting and compressing the water-containing polymer, the screw being provided inside the cylinder, a carbon dioxide charge hole provided in the cylinder, and a discharge port provided in the downstream end portion of the cylinder.

It is preferable that carbon dioxide is charged to the extrusion drying means at a ratio of 0.01 to 10 parts by mass with respect to 100 parts by mass (solid) of the water-containing polymer, and the carbon dioxide charged to the cylinder may be any state of gas, liquid, or solid, including the case of becoming to be gas, liquid, or in the supercritical state. In addition, it is preferable that the water-containing polymer is at least one kind selected from the group consisting of water-containing rubber polymers and water-containing resin polymers, and water-containing rubber polymers are more preferable. Among water-containing rubber polymers, one obtainable by steam-stripping after solution polymerization is preferable.

According to drying method of a water-containing polymer of the present invention, drying performance is good upon drying a water-containing polymer, a load power fluctuation of a drying means such as a drying apparatus can be reduced and stabilized, thereby enabling to dry with improved energy efficiency, and an excellent effect in attempting a productivity enhancement can be exhibited.

### Brief Description of the Drawings

[Fig. 1] Fig. 1 is a schematic view showing the steps from a dehydration step to a drying step.
[Fig. 2] Fig. 2 is a state-transition view of carbon dioxide by temperature and pressure.
[Fig. 3] Fig. 3 is a schematic structural view showing an example of a conventionally known expansion type extrusion drying apparatus.

### Description of Reference Numerals

10: extrusion drying apparatus, 11: extrusion drying apparatus, 12: charge port for polymer, 14: screw (worm), 16: cylinder, 18: dehydrator, 20: vibration conveyer, 22: carbon dioxide charge hole, 24: discharge port, 26: discharge hole, A: water-containing polymer

### Best Mode for Carrying out the Invention

Embodiments of the present invention will be described in more detail. However, the present invention is not limited to these embodiments, and it should be understood that changes, improvements, or the like may suitably be added thereto in a range of not deviating from the gist of the present invention on the basis of general knowledge of those skilled in the art.

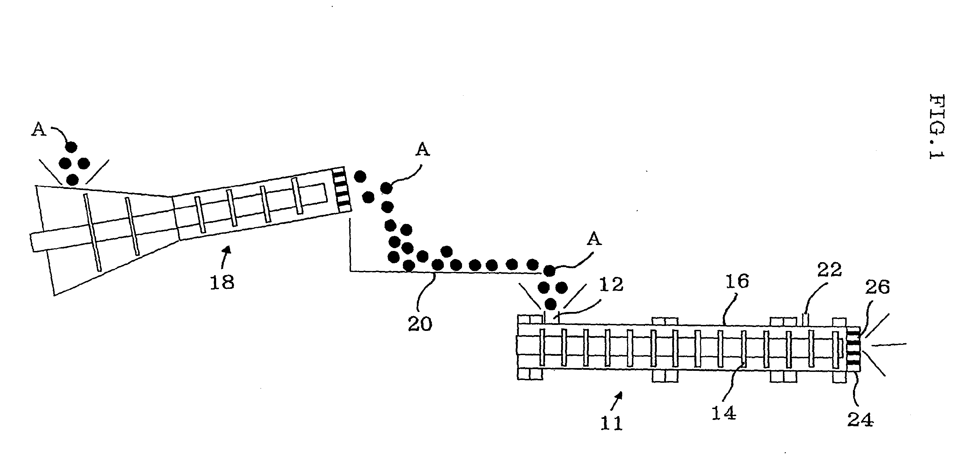

Fig. 1 schematically shows the steps from a dehydration step to a drying step. If solution polymerization is described as an example, after a water-containing polymer having a water content of 40 to 50% by mass is separated from a solution containing a manufactured polymer A by steam-stripping, which is a kind of a method for removing a solvent, and collected, the water-containing polymer A is charged to a dehydrator 18. The water-containing polymer A dehydrated to have a water content of about 5 to 20% by mass by the dehydrator 18 is then charged to a cylinder 16 of an expansion type extrusion drying apparatus 11 from a charge port 12 thereof via a vibration conveyer 20.

Inside the drying apparatus 11, with the water-containing polymer A being transported and compressed towards the down stream side by rotation of a screw 14, carbon dioxide is charged to a cylinder 16 via a carbon dioxide charge hole 22 provided on the downstream side of the cylinder 16, and the polymer is discharged under the atmospheric pressure from a discharge hole 26 of a discharge port 24 provided on the downstream side of the cylinder 16. By this method, operation of stabilizing and reducing a load power fluctuation of the drying apparatus in comparison with a conventional method for drying a water-containing polymer is made possible to enhance productivity, and drying performance can be accelerated by a stronger expansion effect.

Incidentally, as a position for disposing a carbon dioxide charge hole 22, a portion where the cylinder starts to be filled with the polymer on the downstream side of the cylinder 16 as shown in Fig. 1 is preferable. However, it is not limited to this, and it may be on the upstream side viewed from a compression direction of the polymer or in an intermediate portion as long as an apparatus for preventing carbon dioxide to be charged from flowing backward toward the upstream side of the cylinder 16.
In addition, the drying apparatus 11 is operated at a temperature of generally 100 to 300°C, preferably 110 to 250°C, more preferably 120 to 160°C, under a pressure of 1 to 10MPaG (tip portion), preferably 1.5 to 7MPaG (tip portion), more preferably 2 to 5MPaG (tip portion).

By the way, as shown in a state view of carbon dioxide of Fig. 2, it is known that carbon dioxide changes its form among a solid, liquid, gas, and a supercritical state depending on pressure and temperature conditions. Carbon dioxide in the cylinder of the present invention can enhance flowability of the polymer serving as a filler in the cylinder, can reduce and stabilize a load power fluctuation of the drying apparatus, and can enhance productivity even in any state of gas, liquid, or a supercritical state.

Further, if carbon dioxide is in a supercritical state in the cylinder, solubility to water and a polymer is further increased, and permeability into the polymer is strong. Therefore, flowability of the polymer in the cylinder is enhanced, and an expansion effect of the polymer becomes stronger when the polymer is released under atmosphere pressure from the discharge hole and dried.

That is, it is preferable to dissolve carbon dioxide permeating the polymer in water or the polymer in that flowability of the polymer in the cylinder is enhanced, an expansion effect is amplified, and porosity of the polymer is improved to enhance drying performance of a product. This is further preferable in that, since redrying is not necessary, it enhances productivity, energy is saved, and problems of coloring, which is prone to be caused due to heat, apprehensions of an accident of ignition or the like and calamity, a hot bale problem can be prevented as a secondary effect.

The amount of carbon dioxide charged in the cylinder is at a ratio of preferably 0.01 to 10 parts by mass, more preferably 0.05 to 7 parts by mass, and particularly preferably 0.1 to 5 parts by mass with respect to 100 parts by mass (solid) of the water-containing polymer. This is because, by charging carbon dioxide at a ratio within the above ranges, the aforementioned effects of enhancing flowability of the polymer, reducing and stabilizing a load power fluctuation of the drying apparatus, and enhancing productivity enhancement can be exhibited.

In addition, it is also preferable to charge saturated water of carbon dioxide in a steam-stripping step as a solvent-removing step in solution polymerization in that the aforementioned effects can be obtained like the present invention.

As a water-containing polymer of the present invention, it is preferable that the water-containing polymer is at least one kind selected from the group consisting of water-containing rubber polymers and water-containing resin polymers. Examples of the rubber polymers include synthetic rubbers such as solution polymerization styrene-butadiene rubber (S-SBR), emulsion polymerization styrene-butadiene rubber (E-SBR), ethylene alpha-olefin copolymer and/or ethylene·alpha-olefin·non conjugated polyene copolymer, butadiene rubber (BR), isoprene rubber (IR), acrylonitrile butadiene rubber (NBR), and acrylic rubber. Examples of the resin polymers include resins such as ABS resin, AES resin, polyethylene, polystyrene, polypropylene, poly(vinyl chloride), AS resin, butadiene resin, and hydrogenated diene-based copolymer; and a thermoplastic elastomer copolymer (TPE). Incidentally, among the aforementioned water-containing rubber polymers, polymers which can be obtained by steam-stripping after polymerization are preferable.

Incidentally, out of regard for recent environmental problems such as global warming due to increase in amount of carbon dioxide in atmosphere, it is desirable that carbon dioxide discharged from a drying apparatus in the present invention is made harmless, collected, and reused by any means without unintentionally releasing in the atmosphere. As the means, for example, it is possible to give an effluent treatment by trapping with a scrubber or to fix by the use of calcium carbonate or the like.

### Example

Next, the present invention will be described more specifically with referring to Examples. However, the present invention is by no means limited to these Examples.

The sample and the apparatus used in Examples and Comparative Examples will be described below. Incidentally, units for the items described in Tables are as follows:
Treated amount of a polymer in a drying apparatus (wet): on the basis of a water-containing polymer (water content of about 10% by mass) before drying.
Treated amount of a polymer in a drying apparatus (dry): on the basis of a polymer containing no water after drying.
Added amount of a charged fluid (phr): value with respect to 100 parts by mass of a polymer.
Load power fluctuation of a drying apparatus: calculated with fixing a ratio of (load power/amount of treatment).

### (Sample for drying test)

As a sample for a drying test, there was used a crumb prepared by using an ethylene propylene rubber EP82S (trade name, produced by JSR) manufactured by solution polymerization having a Mooney viscosity of 34 ML₁₊₄ at 100°C, an ethylene content of 57.5% by mass, and a DCP content of 4.1% by mass, removing a solvent by steam stripping to give a water content of about 50% by mass, and then dehydrating until it has a water content of about 5 to 20% by mass with the dehydrator described later.

The following dehydrator was used.
Model: R90S (SDU90) produced by the Japan Steel Works, Ltd.
Outer diameter: ϕ216 mm ×ϕ90 mm, Rotational frequency: 45 rpm,
Tip discharge hole: 12 holes with a diameter of 11 mm, Internal temperature: 70 to 100°C,
Internal pressure: 1.5 to 3.0 MPaG,
Water content of rubber at charge port: 40 to 50% by mass, Water content of rubber at discharge port: 5 to 20% by mass

### (Drying apparatus)

The following drying apparatus was used.
Model: monoaxial heat type produced by Anderson Co. LTD.,
Outer diameter: ϕ111 mm, Rotational frequency: 185 rpm,
Tip discharge hole: 4 to 5 holes with ϕ 1.8 mm,
Internal temperature: 120 to 160°C, Internal pressure: 2.0 to 3.0 MPaG (Tip),
Water content of rubber at charge port: 8 to 12% by mass,
Water contents of rubber at a discharge port are described in columns of respective Examples and Comparative Examples of Table 1.

### (Examples 1 to 7)

A water-containing polymer having a water content of about 10% by mass before drying and obtained by subjecting EP82S (solution polymerization type rubber polymer) to removing a solvent and dehydration was charged to an expansion type extrusion drying apparatus in a treatment amount shown in Table 1. Carbon dioxide was charged for drying the polymer, and the polymer was measured for water content after drying. In addition, the average load power of the drying apparatus and a fluctuation range of load power during drying were measured at the same time.
These conditions and results are shown in Table 1.

### (Comparative Example 1)

A water-containing polymer was charged to an expansion type extrusion drying apparatus for drying under the same conditions as in Example 1 except that carbon dioxide was not charged to a drying apparatus, and water content after drying was measured. In addition, the average load power of the drying apparatus and a fluctuation range of load power during drying were measured at the same time.
These conditions and results are shown in Table 1.

### (Comparative Example 2)

A water-containing polymer was charged to an expansion type extrusion drying apparatus for drying under the same conditions as in Example 5 except that carbon dioxide was not charged to a drying apparatus, and water content after drying was measured. In addition, the average load power of the drying apparatus and a fluctuation range of load power during drying were measured at the same time.
These conditions and results are shown in Table 1.

### (Comparative Example 3)

A water-containing polymer was charged to an expansion type extrusion drying apparatus for drying under the same conditions as in Example 3 except that nitrogen was charged in place of carbon dioxide to a drying apparatus, and water content after drying was measured. In addition, the average load power of the drying apparatus and a fluctuation range of load power during drying were measured at the same time.
These conditions and results are shown in Table 1.

### (Comparative Example 4)

A water-containing polymer was charged to an expansion type extrusion drying apparatus for drying under the same conditions as in Example 1 except that nitrogen was charged in place of carbon dioxide to a drying apparatus.
These conditions and results are shown in Table 1.

**[Table 1]**

| | Kind of fluid charged in drying apparatus | Rubber- treating amount of drying apparatus Wet (kg/h) | Rubber- treating amount of drying apparatus Dry (kg/h) | Added amount of charged fluid (phr) | Tip temperature of dryer °C | Tip pressure of dryer (MPaG) | Water content of polymer after drying (mass %) | Average load power of drying apparatus (kW) | Fluctuation range of load power apparatus (kW) |
|---|---|---|---|---|---|---|---|---|---|
| Example 1 | Carbon dioxide | 222 | 200 | 7 | 150 | 3.0 | 0.3 | 23 | 0.7 |
| Example 2 | Carbon dioxide | 222 | 200 | 1 | 150 | 3.0 | 0.3 | 23 | 0.7 |
| Example 3 | Carbon dioxide | 222 | 200 | 0.1 | 150 | 3.0 | 0.4 | 24 | 0.9 |
| Example 4 | Carbon dioxide | 222 | 200 | 0.01 | 150 | 1.0 | 0.5 | 24 | 1.1 |
| Example 5 | Carbon dioxide | 222 | 200 | 7 | 150 | 3.0 | 1.1 | 18 | 0.7 |
| Example 6 | Carbon dioxide | 278 | 250 | 7 | 150 | 3.0 | 0.3 | 29 | 0.7 |
| Example 7 | Carbon dioxide | 222 | 200 | 7 | 160 | 7.5 | 0.3 | 21 | 0.5 |
| Comp. Ex.1 | None | 222 | 200 | 0 | 150 | 3.0 | 1.1 | 25 | 1.2 |
| Comp. Ex. 2 | None | 278 | 250 | 0 | 150 | 3.0 | 1.1 | 33 | 1.2 |
| Comp. Ex. 3 | Nitrogen | 222 | 200 | 0.1 | 150 | 3.0 | 0.4 | 25 | 1.4 |
| Comp. Ex. 4 | Nitrogen | - | - | 7 | - | - | Inoperatable | Inoperatable | - |

### (Discussion)

As is understood from the results of Examples 1 to 4 and Comparative Example 1, which have the same treating amount, each of Examples 1 to 4, where carbon dioxide is charged in amounts of 7 phr, 1 phr, 0.1 phr, and 0.01 phr, respectively, improved with reduced water content of a polymer after drying, reduced load power of a drying apparatus, and a reduced fluctuation range of load power in comparison with Comparative Example 1, where carbon dioxide is not charged. In addition, it is understood from the results of Example 5 that load power of a drying apparatus is greatly reduced when the water content of a polymer is made the same as that of the Comparative Example 1.

As understood from the results of Example 6 and Comparative Example 2, even when the amount of treating rubber is increased, effects of charging carbon dioxide can be obtained. Example 7 is a case where carbon dioxide inside the drying apparatus is in a supercritical state. In this case, improvement in dissolvability in rubber or water in rubber is accelerated, and an effect in improving water-content of rubber can be obtained.

Incidentally, Comparative Example 3, where nitrogen was used as gas to be charged to the drying apparatus in the same amount as in Example 3, did not show improvement, and it had the same load power of the drying apparatus as that of Comparative Example 1 and a rather increased fluctuation range of load power though water-content of rubber after drying was improved. The reason seems to be because nitrogen has low dissolvability to rubber or water in rubber in comparison with carbon dioxide.

Further, Comparative Example 4, which employed the same conditions as Example 1 except that nitrogen was used in place of carbon dioxide, showed a large load power fluctuation of the drying apparatus, and nitrogen charged thereto flew backward (back flush) toward the upstream side of the drying apparatus. Thus, it was inoperatable.
Therefore, the data of rubber-treating amount or water content of rubber could not be obtained.

### Industrial Applicability

Since a method for drying a polymer of the present invention can stabilize and reduce a load power fluctuation of the drying apparatus in drying a water-containing polymer manufactured by solution polymerization, emulsion polymerization, suspension polymerization, or the like, and can attempt a productivity enhancement, it has very high industrial value.

## Claims

1. A method for drying a water-containing polymer, wherein, using an expansion type extrusion drying means, carbon dioxide is charged to the extrusion drying means while extruding the water-containing polymer.

2. A method for drying a water-containing polymer according to Claim 1, wherein the expansion type extrusion drying means is provided with:
a cylinder,
a water-containing polymer charge port provided on the upstream side of the cylinder,
a screw for transporting and compressing the water-containing polymer, the screw being provided inside the cylinder,
a carbon dioxide charge hole provided in the cylinder, and
a discharge port provided in the downstream end portion of the cylinder.

3. A method for drying a water-containing polymer according to Claim 1, wherein carbon dioxide is charged inside the extrusion drying means at a ratio of 0.01 to 10 parts by mass with respect to 100 parts by mass (solid) of the water-containing polymer.

4. A method for drying a water-containing polymer according to Claim 1, wherein the carbon dioxide inside the cylinder is gas, liquid, or in the supercritical state.

5. A method for drying a water-containing polymer according to any one of Claims 1 to 4, wherein the water-containing polymer is at least one kind selected from the group consisting of water-containing rubber polymers and water-containing resin polymers.

6. A method for drying a water-containing polymer according to Claim 5, wherein the water-containing rubber polymer can be obtained by steam-stripping after solution polymerization.

7. A method for drying a water-containing polymer according to any one of Claims 1 to 5, wherein carbon dioxide is charged to the cylinder via the carbon dioxide charge hole provided on the downstream side of the cylinder with the water-containing polymer being transported and compressed towards the downstream side by rotation of the screw inside the extrusion drying means, followed by discharging the polymer from the discharge port provided at the downstream end of the cylinder.
